# EUROPÄISCHE PATENTSCHRIFT

(11) **EP 3 708 822 B1**
(45) Veröffentlichungstag und Bekanntmachung des Hinweises auf die Patenterteilung: **12.03.2025**
(21) Anmeldenummer: 19162190.3
(22) Anmeldetag: 12.03.2019
(51) Int. Cl.: F02N 1/00, F02N 5/02, F02N 3/02

(54) **ANWERFVORRICHTUNG, SEILROLLENBAUGRUPPE FÜR EINE ANWERFVORRICHTUNG UND VERBINDUNGSFEDER FÜR EINE SEILROLLENBAUGRUPPE**
MANUALLY-OPERATED TURNING GEAR, CABLE ROLLER MODULE FOR MANUALLY-OPERATED TURNING GEAR AND CONNECTING SPRING FOR A CABLE ROLLER MODULE
DISPOSITIF DE LANCEMENT, MODULE DE POULIE POUR UN DISPOSITIF DE LANCEMENT ET RESSORT DE CONNEXION POUR UN MODULE DE POULIE

(43) Veröffentlichungstag der Anmeldung: 16.09.2020
(73) Patentinhaber: Andreas Stihl AG & Co. KG, 71336 Waiblingen (DE)
(72) Erfinder: NEFZGER, Markus, 70186 Stuttgart (DE); KARRAR, Carel, 73098 Rechberghausen (DE)
(74) Vertreter: Reinhardt, Annette

(56) Entgegenhaltungen:
- WO-A1-2015/072900
- CN-U- 206 889 541
- US-A- 3 858 566
- US-B1- 10 174 537

## Beschreibung

Die Erfindung betrifft eine Seilrollenbaugruppe für eine Anwerfvorrichtung zum Starten eines Verbrennungsmotors eines handgeführten Arbeitsgeräts nach dem Oberbegriff des Anspruchs 1 und eine Anwerfvorrichtung mit einer Seilrollenbaugruppe.

Aus der US 2004/0177823 A1 ist eine Anwerfvorrichtung zum Starten eines Verbrennungsmotors bekannt. Beim Anwerfen des Verbrennungsmotors wird eine Seilrolle über ein Anwerfseil in Drehbewegung versetzt. Die Seilrolle ist mit einer Dämpfungsfeder verbunden, mittels derer die Rotationsenergie der Seilrolle auf die Kurbelwelle eines Verbrennungsmotors übertragen wird.

Aus der WO 2015/072900 A1 ist eine Seilrolle mit einer Federaufnahme bekannt, in die eine Verbindungsfeder aufgenommen ist. Am Umfangsrand der Seilrolle ist eine spiralförmige Vertiefung eingebracht, in der ein Anwerfseil aufgewickelt ist. Die Federaufnahme und die Vertiefung überlappen sich sowohl in Axialrichtung der Drehachse gesehen als auch in Radialrichtung gesehen.

Aus der US 3,858,566 A ist ebenfalls eine Seilrolle mit einer spiralförmigen Vertiefung bekannt, die mit einer Rückholfeder verbunden ist. Die Vertiefung überlappt die Rückholfeder sowohl in Axialrichtung als auch in Radialrichtung gesehen.

Der Erfindung liegt die Aufgabe zugrunde, eine Seilrollenbaugruppe mit kompaktem Aufbau zu schaffen.

Diese Aufgabe wird durch eine Seilrollenbaugruppe mit den Merkmalen des Anspruchs 1 gelöst.

Eine weitere Aufgabe der Erfindung besteht darin, eine Anwerfvorrichtung mit einer Seilrollenbaugruppe derart weiterzubilden, dass die Anwerfvorrichtung kompakt gestaltet ist.

Diese Aufgabe wird durch eine Anwerfvorrichtung mit den Merkmalen des Anspruchs 8 gelöst.

Für die erfindungsgemäße Seilrollenbaugruppe ist vorgesehen, dass sich die Federaufnahme der Seilrolle und die umlaufende Vertiefung zur Aufnahme eines Anwerfseils in der außen liegenden Umfangsseite der Seilrolle sowohl in Axialrichtung der Drehachse gesehen als auch in Radialrichtung der Drehachse gesehen überlappen. Dadurch kann insbesondere in Axialrichtung und/oder Radialrichtung Bauraum eingespart werden und die Seilrollenbaugruppe kompakt gestaltet sein. Die erfindungsgemäße Seilrollenbaugruppe für eine Anwerfvorrichtung zum Starten eines Verbrennungsmotors eines handgeführten Arbeitsgerätes kann so gestaltet sein, dass sie im handgeführten Arbeitsgerät nur wenig Bauraum beansprucht und dadurch das handgeführte Arbeitsgerät kompakt gestaltet sein kann. Dadurch ist das handgeführte Arbeitsgerät leicht zu führen, und für den Bediener wird ein komfortables Arbeiten ermöglicht. Weiterhin kann durch eine kompaktere Gestalt insbesondere in Radialrichtung die Kühlluftzufuhr zum Verbrennungsmotor verbessert werden.

Erfindungsgemäß umfasst die Federaufnahme eine Federkammer und einen Einhängbereich zur Verbindung mit der Verbindungsfeder, und der Einhängbereich der Federaufnahme und die Vertiefung zur Aufnahme des Anwerfseils sind in Axialrichtung zumindest teilweise nebeneinanderliegend angeordnet. Dadurch ist das erste Ende der Verbindungsfeder, wenn es in den Einhängbereich eingehängt ist, radial weit außen liegend angeordnet. Bei einer Drehung der Seilrolle um ihre Drehachse kann dadurch ein großes Drehmoment von der Seilrolle auf die Verbindungsfeder übertragen werden. Darüber hinaus kann die Ausdehnung der Federaufnahme, insbesondere der Federkammer, in Radialrichtung groß sein. Dadurch können große Verbindungsfedern verbaut werden. Solche Federn können große Kräfte übertragen. Dadurch, dass die Vertiefung der Seilrolle bereits radial innerhalb der Federaufnahme beginnt und nicht wie im Stand der Technik üblich erst radial außerhalb, lässt sich bei gleichem Seilrollendurchmesser mehr Seil auf der Seilrolle unterbringen. Demnach ist es möglich, den Seilrollendurchmesser zu reduzieren und das unterzubringende Seilvolumen konstant zu halten. Durch die Reduktion des Seilrollendurchmessers kann Luft besser in das Anwerfgehäuse eindringen und den Verbrennungsmotor besser kühlen.

Insbesondere weist der Einhängbereich der Federaufnahme eine in Axialrichtung gemessene Breite auf. Insbesondere weist die Federkammer der Federaufnahme eine in Axialrichtung gemessene Breite auf. Vorteilhaft ist die Breite des Einhängbereichs kleiner als 100%, insbesondere kleiner als 70%, bevorzugt kleiner als 65% der Breite der Federkammer. Dadurch kann die Verbindungsfeder mit ihrem Einhängbereich platzsparend in Axialrichtung neben der Vertiefung zur Aufnahme des Anwerfseils angeordnet sein und dennoch eine ausreichende Breite zur Gewährleistung der erforderlichen Stabilität der Verbindungsfeder aufweisen.

Insbesondere weist die Seilrolle eine in Axialrichtung gemessene maximale Breite auf. Vorteilhaft beträgt eine an der Umfangsseite der Seilrolle in Axialrichtung gemessene Breite der Vertiefung zur Aufnahme des Anwerfseils mindestens 15%, insbesondere mindestens 25% der maximalen Breite der Seilrolle. Dadurch bietet die Vertiefung in Axialrichtung ausreichend Platz zur Aufnahme des Anwerfseils.

Erfindungsgemäß ist die Verbindungsfeder mit dem ersten Ende in den Einhängbereich der Federaufnahme eingehängt und weist eine in Axialrichtung gemessene maximale Breite auf. Eine in Axialrichtung gemessene Breite der Verbindungsfeder an ihrem ersten Ende ist kleiner als die maximale Breite der Verbindungsfeder. Die in Axialrichtung gemessene Breite der Verbindungsfeder an ihrem ersten Ende ist insbesondere kleiner als 75%, bevorzugt kleiner als 65% der maximalen Breite der Verbindungsfeder. Dadurch ist es möglich, das erste Ende der Verbindungsfeder platzsparend in einem in Axialrichtung vergleichsweise kleinen Einhängbereich unterzubringen und die Feder gleichzeitig ausreichend stabil zu gestalten. Es hat sich gezeigt, dass Federbrüche der Verbindungsfeder in der Regel entfernt von ihren Enden stattfinden. Aus diesem Grund kann das erste Ende der Verbindungsfeder schmaler gestaltet sein, und die Verbindungsfeder kann zwischen ihren Enden für eine hohe Stabilität ausreichend breit gestaltet sein.

Zweckmäßig ist die Verbindungsfeder in Umfangsrichtung um die Drehachse in einem Winkelbereich von mindestens 10°, insbesondere von mindestens 15° an ihrem ersten Ende schmaler als die maximale Breite der Verbindungsfeder. Der Begriff "erstes Ende der Verbindungsfeder" bezeichnet vorliegend einen Endbereich der Verbindungsfeder, der sich über einen Winkelbereich der Feder erstreckt, und nicht nur einen diskreten Punkt. Durch die schmalere Gestaltung der Verbindungsfeder an ihrem ersten Ende kann ein Einhängfortsatz am ersten Ende der Verbindungsfeder in Umfangsrichtung ausreichend lang gestaltet sein, um eine sichere Verbindung zur Seilrolle herzustellen und gleichzeitig wenig Platz in Axialrichtung in Anspruch zu nehmen.

In vorteilhafter Weiterbildung der Erfindung weist die Seilrolle an ihrer Umfangsseite eine Luftleitkontur auf. Typischerweise wird die Seilrollenbaugruppe auf der Kurbelwelle eines Verbrennungsmotors so angeordnet, dass zwischen der Seilrollenbaugruppe und einem Zylinder des Verbrennungsmotors ein Gebläserad zur Förderung von Kühlluft zum Zylinder angeordnet ist. Bei der Förderung der Kühlluft zum Zylinder strömt die Luft auf ihrem Weg von der Außenseite des handgeführten Arbeitsgeräts zum Zylinder des Verbrennungsmotors an der Seilrollenbaugruppe vorbei. Durch die Luftleitkontur kann der Verlauf des Luftstroms positiv beeinflusst werden. Der Strömungswiderstand kann verringert und die Kühlluft an der Seilrolle vorbei geleitet werden.

Bevorzugt ist die Luftleitkontur so gestaltet, dass der Kühlluftstrom nicht zu verschmutzungsempfindlichen Bauteilen wie beispielsweise der Verbindungsfeder gelangen kann.

Zweckmäßig ist die Luftleitkontur der Seilrolle in einem Schnitt entlang der Drehachse konkav. Dadurch kann einerseits die Luft besser zum Gebläserad und zum Zylinder geleitet werden und andererseits die Verbindungsfeder der Seilrollenbaugruppe vor dem Eintrag von Verunreinigungen durch die Kühlluft geschützt sein.

Vorteilhaft ist die Verbindungsfeder eine Spiralfeder.

Für die erfindungsgemäße Anwerfvorrichtung mit einer Seilrollenbaugruppe ist vorgesehen, dass die Anwerfvorrichtung eine Koppeleinrichtung zur Verbindung der Seilrolle mit einer Kurbelwelle des Verbrennungsmotors umfasst und dass ein zweites Ende der Verbindungsfeder der Seilrollenbaugruppe drehfest mit der Koppeleinrichtung verbunden ist.

Vorteilhaft ist die Koppeleinrichtung ein Mitnehmer. Vorteilhaft deckt der Mitnehmer die Federkammer in Axialrichtung vollständig ab. Dadurch können die Federkammer und insbesondere die Verbindungsfeder vor Verunreinigungen, insbesondere vor Verunreinigungen aus dem Kühlluftstrom, geschützt werden. Dadurch ist die Verbindungsfeder weniger störanfällig und weitgehend wartungsfrei.

In vorteilhafter Weiterbildung der Erfindung ist vorgesehen, dass die Koppeleinrichtung Koppelmittel zur Kopplung der Anwerfvorrichtung mit der Kurbelwelle des Verbrennungsmotors umfasst, dass der Mitnehmer einen Luftleitkragen umfasst und dass der Luftleitkragen auf einer der Verbindungsfeder in Axialrichtung abgewandten Seite des Mitnehmers angeordnet ist. Vorteilhaft ist der Luftleitkragen radial außerhalb der Koppelmittel angeordnet. Dadurch kann der Luftleitkragen die Koppelmittel vor Verunreinigungen aus dem Kühlluftstrom schützen. Dies ermöglicht eine weitgehend störungsfreie Kopplung des Mitnehmers über seine Koppelmittel an die Kurbelwelle des Verbrennungsmotors.

Zweckmäßig ist der Luftleitkragen in einem Schnitt entlang der Drehachse zumindest in einem Abschnitt konisch. Dadurch kann der Kühlluftstrom auf besonders vorteilhafte Weise zum Gebläserad gefördert werden.

Die Breite der erfindungsgemäßen Verbindungsfeder an ihrem ersten Ende ist kleiner als die maximale Breite der Verbindungsfeder. Die Breite der erfindungsgemäßen Verbindungsfeder an ihrem ersten Ende ist insbesondere kleiner als 75%, bevorzugt kleiner als 65% der maximalen Breite der Verbindungsfeder. Wie oben bereits beschrieben, ist die Verbindungsfeder dadurch stabil und kann gleichzeitig unter Einsparung von Bauraum mit einer Seilrolle verbunden werden.

Ein Ausführungsbeispiel der Erfindung wird im Folgenden anhand der Zeichnung erläutert. Es zeigen:
- Fig. 1: eine Explosionsdarstellung einer Anwerfvorrichtung,
- Fig. 2: eine ausschnittsweise schematische Darstellung eines Schnitts durch die Anwerfvorrichtung aus Fig. 1 an einem Arbeitsgerät,
- Fig. 3: eine perspektivische Darstellung einer Seilrollenbaugruppe der Anwerfvorrichtung nach Fig. 1,
- Fig. 4: einen Schnitt durch die Seilrollenbaugruppe aus Fig. 3 mit Anwerfseil,
- Fig. 5: eine perspektivische Darstellung einer Verbindungsfeder der Seilrollenbaugruppe nach Fig. 1,
- Fig. 6: eine Seitenansicht der Verbindungsfeder nach Fig. 5,
- Fig. 7: eine perspektivische Darstellung eines Mitnehmers der Anwerfvorrichtung nach Fig. 1,
- Fig. 8: eine schematische Darstellung eines Schnitts durch die Seilrollenbaugruppe und den Mitnehmer aus Fig. 1,
- Fig. 9: eine Seitenansicht auf die Seilrollenbaugruppe und den Mitnehmer aus Fig. 8,
- Fig. 10: eine perspektivische Darstellung einer Verbindungsfeder der Seilrollenbaugruppe nach Fig. 1 und
- Fig. 11: eine schematische Darstellung eines handgeführten Arbeitsgeräts mit einer Anwerfvorrichtung.

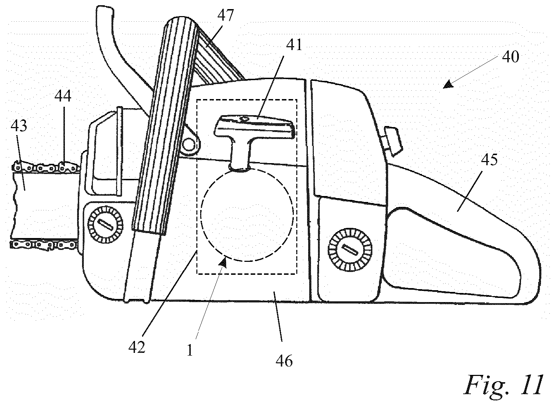

Fig. 11 zeigt ein handgeführtes Arbeitsgerät 40, im Ausführungsbeispiel eine Motorkettensäge. Bei dem handgeführten Arbeitsgerät kann es sich auch um ein anderes handgeführtes Arbeitsgerät, beispielsweise um ein Blasgerät, einen Freischneider, einen Trennschleifer oder dergleichen handeln. Das Arbeitsgerät 40 weist ein Gehäuse 46 auf, in dem ein schematisch dargestellter Verbrennungsmotor 42 angeordnet ist. Der Verbrennungsmotor 42 ist vorzugsweise ein Einzylindermotor, insbesondere ein Zweitaktmotor oder ein gemischgeschmierter Viertaktmotor. Der Verbrennungsmotor 42 dient zum Antrieb eines Werkzeugs. Im Ausführungsbeispiel ist das Werkzeug eine um eine Führungsschiene 43 umlaufend angetriebene Sägekette 44. Zum Führen des Arbeitsgeräts 40 dienen ein Handgriff 45 sowie ein Griffrohr 47. Zum Anwerfen des Verbrennungsmotors 42 ist eine Anwerfvorrichtung 1 vorgesehen, die in Fig. 11 ebenfalls schematisch dargestellt ist. Die Anwerfvorrichtung 1 ist vorzugsweise ein von Hand zu betätigender Seilzugstarter. Die Anwerfvorrichtung 1 umfasst hierzu einen Anwerfgriff 41, der aus dem Gehäuse 46 des Arbeitsgeräts 40 ragt.

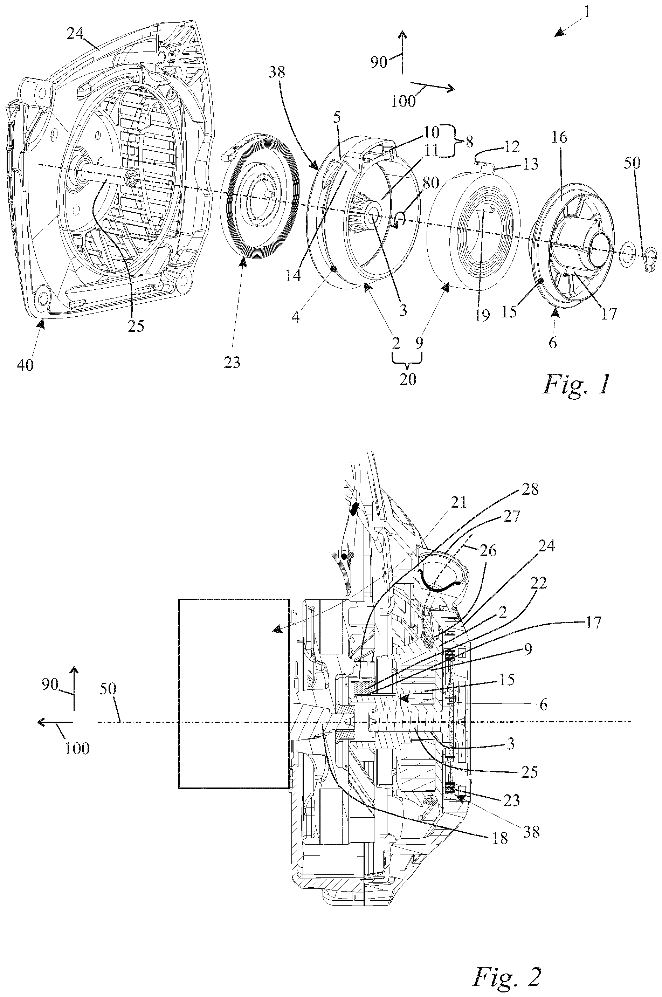

In Fig. 1 ist die Anwerfvorrichtung 1 im Einzelnen dargestellt. Die Anwerfvorrichtung 1 umfasst ein Anwerfergehäuse 24, eine Rückholfeder 23, eine Seilrollenbaugruppe 20 und eine Koppeleinrichtung 6. Das Anwerfergehäuse 24 bildet vorteilhaft einen Teil des Gehäuses 46 des handgeführten Arbeitsgeräts 40.

Die Seilrollenbaugruppe 20 besteht aus einer Seilrolle 2 und einer Verbindungsfeder 9. Das Anwerfergehäuse 24 weist einen Lagerzapfen 25 auf. Auf dem Lagerzapfen 25 sind die Seilrolle 2 und die Koppeleinrichtung 6 drehbar gelagert. Hierzu weist die Seilrolle 2 eine Nabe 3 auf. Der Lagerzapfen 25 ist durch die Nabe 3 gesteckt. Die Seilrolle 2 ist über die Rückholfeder 23 mit dem Anwerfergehäuse 24 verbunden. Die Rückholfeder 23 ist im Ausführungsbeispiel eine Spiralfeder. Die Rückholfeder 23 ist zwischen dem Anwerfergehäuse 24 und der Seilrolle 2 in einer Rückholfederaufnahme 38 der Seilrolle 2 angeordnet und an einem Ende mit dem Anwerfergehäuse 24 und an ihrem anderen Ende mit der Seilrolle 2 drehfest verbunden. Die Seilrolle 2 ist über die Verbindungsfeder 9 mit der Koppeleinrichtung 6 verbunden. Die Verbindungsfeder 9 ist eine Spiralfeder. Die Verbindungsfeder 9 ist zwischen der Seilrolle 2 und der Koppeleinrichtung 6 in einer Federaufnahme 8 der Seilrolle 2 angeordnet. Die Verbindungsfeder 9 ist auf der dem Anwerfergehäuse 24 abgewandten Seite der Seilrolle 2 angeordnet.

Die Anwerfvorrichtung 1 dient zum Anwerfen des in Fig. 2 dargestellten Verbrennungsmotors 21. Auf der Seilrolle 2 ist ein in Fig. 2 dargestelltes Anwerfseil 26 aufgewickelt. Ein erstes Ende des Anwerfseils 26 ist an der Seilrolle 2 festgelegt. Ein zweites Ende des Anwerfseils 26 ist durch einen Anwerfstutzen 27 des Anwerfergehäuses 24 aus dem Anwerfergehäuse 24 herausgeführt. Zum Starten des Verbrennungsmotors 21 zieht der Bediener an dem Anwerfgriff 41 (Fig. 11), der am zweiten Ende des Anwerfseils 26 fixiert ist. Der Zug am Anwerfseil 26 versetzt die Seilrolle 2 in Rotation um eine Drehachse 50. Hierbei dreht sich die Seilrolle 2 um den Lagerzapfen 25. Die Drehachse 50 erstreckt sich in einer Axialrichtung 100. Die Axialrichtung 100 verläuft von der Rückholfederaufnahme 38 der Seilrolle 2 in Richtung auf die Federaufnahme 8 zur Aufnahme der Verbindungsfeder 9. Die Axialrichtung 100 verläuft von der Seilrolle 2 in Richtung auf die Verbindungsfeder 9. Senkrecht zur Drehachse 50 erstreckt sich eine Radialrichtung 90. Die Rotationsenergie der Seilrolle 2 wird über die Verbindungsfeder 9 auf die Koppeleinrichtung 6 übertragen. Die Verbindungsfeder 9 dient hierbei der Dämpfung von ruckartigen und ungleichmäßigen Zugbewegungen. Es kann auch vorgesehen sein, dass die Verbindungsfeder der Zwischenspeicherung von Energie dient, so dass die Verbindungsfeder zunächst durch mehrere Anwerfhübe am Anwerfseil gespannt werden kann, bevor die Verbindungsfeder ihre gespeicherte Energie über die Koppeleinrichtung an die Kurbelwelle abgibt. In diesem Fall ist die Verbindungsfeder typischerweise über einen Freilauf mit der Seilrolle verbunden.

Die Koppeleinrichtung 6 besitzt Koppelmittel 17. Im Ausführungsbeispiel ist die Koppeleinrichtung 6 ein Mitnehmer 15. Die Koppelmittel 17 sind als Rastvorsprünge an einem Umfangsbereich des Mitnehmers 15 ausgebildet. Es kann auch vorgesehen sein, dass es sich bei den Koppelmitteln der Koppeleinrichtung der Anwerfvorrichtung um Klinken handelt.

Der Verbrennungsmotor 21 besitzt eine Kurbelwelle 18. Ein Gebläserad 28 ist drehfest mit der Kurbelwelle 18 verbunden. Das Gebläserad 28 übergreift die Koppelmittel 17 der Koppeleinrichtung 6 der Anwerfvorrichtung 1 mit einem topfförmigen Vorsprung. An diesem kopfförmigen Vorsprung sind Koppelmittel 22 der Kurbelwelle 18 schwenkbar gelagert. Die Koppelmittel 22 der Kurbelwelle 18 sind im Ausführungsbeispiel Klinken. Es kann jedoch auch vorgesehen sein, dass es sich bei den Koppelmitteln der Kurbelwelle um Rastvorsprünge oder ähnliches handelt. Im Ausführungsbeispiel sind die Koppelmittel 22 der Kurbelwelle 18 durch Federn in Richtung der Koppelmittel 17 der Koppeleinrichtung 6 der Anwerfvorrichtung 1 vorgespannt.

Bei Zug am Anwerfseil 26 wird die Koppeleinrichtung 6 der Anwerfvorrichtung 1 in Rotation versetzt und nimmt über die als Rastvorsprünge ausgebildeten Koppelmittel 17 der Koppeleinrichtung 6 die als Klinken ausgebildeten Koppelmittel 22 der Kurbelwelle 18 mit. Dadurch wird das Gebläserad 28 und damit die Kurbelwelle 18 in Rotation versetzt. Wenn die Kurbelwelle 18 schneller dreht als der Mitnehmer 15, verlieren die Koppelmittel 22 ihren Kontakt zu den als Rastvorsprüngen ausgebildeten Koppelmitteln 17 der Anwerfvorrichtung 1. Zu diesem Zeitpunkt ist der Anwerfvorgang bereits beendet und die Kurbelwelle 18 wird vom Verbrennungsmotor 21 angetrieben.

Durch die Rotation der Seilrolle 2 beim Anwerfhub wird auch die Rückholfeder 23 gespannt. Nach Beendigung eines Anwerfhubs wird die Seilrolle 2 durch die Rückholfeder 23 entgegen ihrer Rotationsrichtung bei Zug am Anwerfseil 26 in Rotation versetzt und das Anwerfseil 26 wieder auf die Seilrolle 2 aufgewickelt.

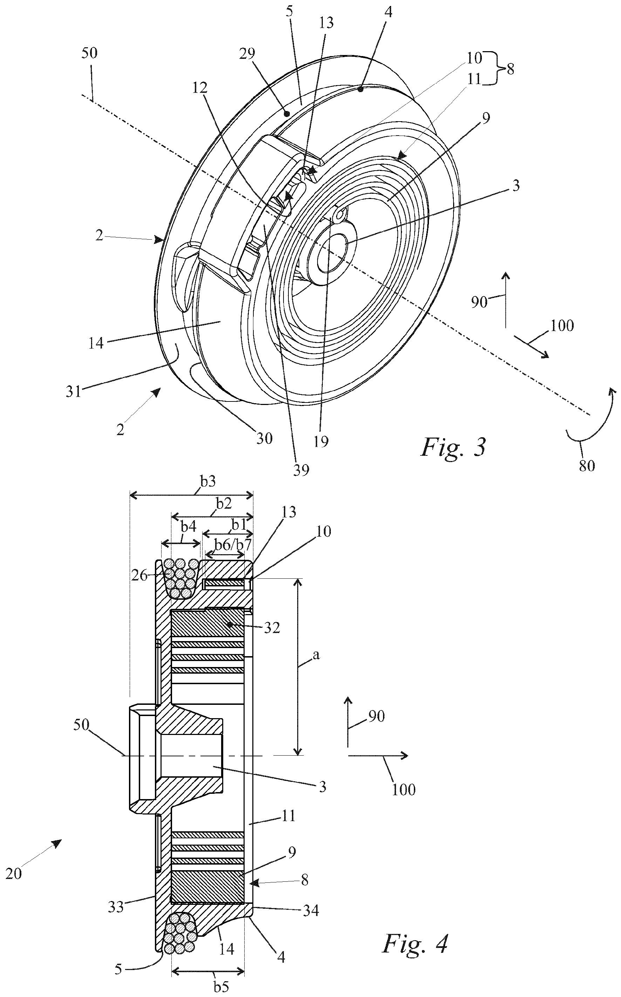

Fig. 3 zeigt die Seilrollenbaugruppe 20. Die Verbindungsfeder 9 der Seilrollenbaugruppe 20 ist mit einem ersten Ende 12 drehfest mit der Seilrolle 2 der Seilrollenbaugruppe 20 verbunden. Hierzu weist die Verbindungsfeder 9 an ihrem ersten Ende 12 einen Einhängfortsatz 13 auf. Mit "erstem Ende" ist in diesem Zusammenhang ein bestimmter Bereich bezüglich einer Umfangsrichtung 80 bezeichnet. Die Umfangsrichtung 80 verläuft in Richtung um die Drehachse 50 herum.

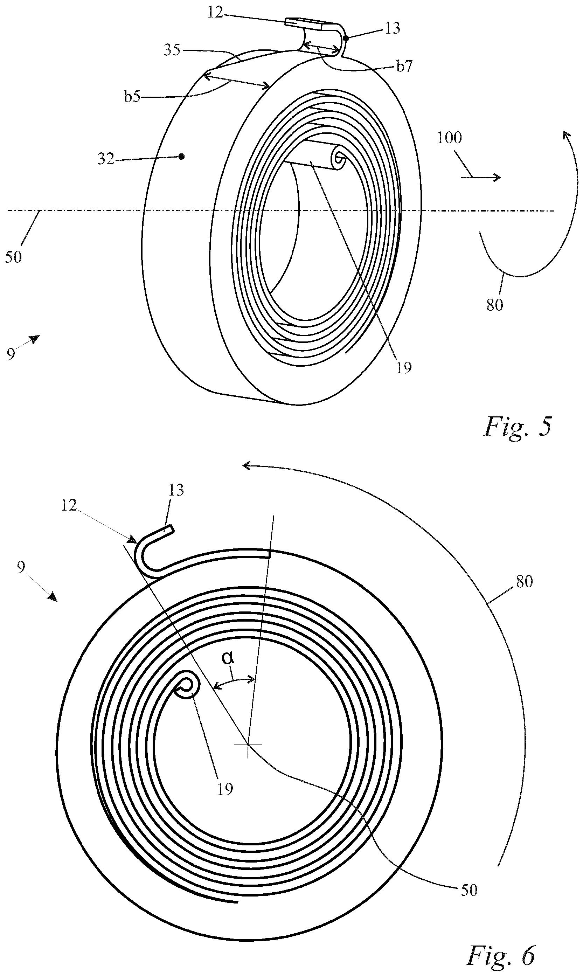

Die Seilrolle 2 weist zur Aufnahme der Verbindungsfeder 9 die Federaufnahme 8 auf. Die Federaufnahme 8 umfasst eine Federkammer 11 und einen Einhängbereich 10. Der Einhängbereich 10 der Federkammer 11 dient zur Verbindung der Seilrolle 2 mit der Verbindungsfeder 9. Der Einhängbereich 10 ist in Radialrichtung 90 weiter entfernt von der Drehachse 50 angeordnet als die Federkammer 11. Wie in Fig. 3 dargestellt, ist die Verbindungsfeder 9 mit ihrem Einhängfortsatz 13 in den Einhängbereich 10 der Federaufnahme 8 der Seilrolle 2 eingehängt. Der Einhängfortsatz 13 ist auch in Fig. 1 dargestellt. Der Einhängfortsatz 13 ist im Ausführungsbeispiel entgegen der Windungsrichtung der Verbindungsfeder 9, also in Umfangsrichtung 80, umgebogen. Der Einhängfortsatz 13 bildet einen Teil des ersten Endes 12 der Verbindungsfeder 9. Die Verbindungsfeder 9 umfasst einen Grundkörper 32 und den Einhängfortsatz 13. Das erste Ende der Verbindungsfeder 9 liegt in Radialrichtung 90 außen. Der Einhängfortsatz 13 ist im Ausführungsbeispiel in einer Ansicht in Axialrichtung 100 U-förmig gestaltet. Dies ist auch in Fig. 6 dargestellt. Der Einhängfortsatz 13 kann auch in einer anderen Form vom Grundkörper 32 abgewinkelt sein. Wie aus den Fig. 1 und 3 ersichtlich, ist die Form des Einhängbereichs 10 der Federaufnahme 8 der Form des Einhängfortsatzes 13 der Verbindungsfeder 9 angepasst. Dementsprechend ist die Form des Einhängbereichs 10 der Federaufnahme 8 in einer Ansicht entgegen der Axialrichtung 100 im Wesentlichen L-förmig. In Umfangsrichtung 80 neben dem Einhängbereich 10 ist ein Aufnahmeraum 39 für einen Knoten am ersten Ende des Anwerfseils 26 vorgesehen. Der Knoten des Anwerfseils 26 und der Einhängfortsatz 13 der Verbindungsfeder 9 haben im Wesentlichen den gleichen radialen Abstand zur Drehachse 50.

Wie in Fig. 1 gezeigt, besitzt die Verbindungsfeder 9 ein zweites Ende 19. Das zweite Ende 19 der Verbindungsfeder 9 liegt in Radialrichtung 90 innen. Das zweite Ende 19 der Verbindungsfeder 9 der Seilrollenbaugruppe 20 ist drehfest mit der Koppeleinrichtung 6 verbunden. Hierzu besitzt der Mitnehmer 15 eine in bekannter Weise gestaltete, nicht gezeigte Aufnahme für das zweite Ende 19.

Wie in Fig. 3 dargestellt, weist die Seilrolle 2 in ihrer in Radialrichtung 90 außen liegenden Umfangsseite 4 eine umlaufende Vertiefung 5 zur Aufnahme des Anwerfseils 26 auf. Die Vertiefung 5 besitzt einen Vertiefungsboden 29 und sich in Axialrichtung 100 gegenüberliegende Vertiefungsseitenwände 30 und 31. Die Vertiefung 5 läuft vollständig um die Drehachse 50 um.

Fig. 4 zeigt einen Schnitt durch die Seilrollenbaugruppe 20 mit auf der Seilrolle 2 aufgewickeltem Anwerfseil 26. Die Schnittebene enthält die Drehachse 50 der Seilrolle 2 und den Einhängfortsatz 13 der Verbindungsfeder 9. Die Federaufnahme 8 und die Vertiefung 5 überlappen sich sowohl in Axialrichtung 100 als auch in Radialrichtung 90 gesehen. Die Vertiefung 5 und die Federaufnahme 8 liegen in einer gemeinsamen, senkrecht zur Drehachse 50 verlaufenden ersten Ebene. Die Vertiefung 5 und die Federaufnahme 8 liegen in einer gemeinsamen, senkrecht zur Radialrichtung 90 verlaufenden zweiten Ebene. Die erste Ebene und die zweite Ebene stehen senkrecht aufeinander. Die Federaufnahme 8 und die Vertiefung 5 sind sowohl in Axialrichtung 100 auf derselben Höhe als auch in Radialrichtung 90 auf derselben Höhe angeordnet.

Der Einhängbereich 10 der Federaufnahme 8 und die Vertiefung 5 zur Aufnahme des Anwerfseils 26 überlappen sich in Axialrichtung 100 gesehen. Der Einhängbereich 10 und die Vertiefung 5 sind in Axialrichtung 100 zumindest teilweise nebeneinanderliegend angeordnet. Die Federkammer 11 und die Vertiefung 5 überlappen sich in Radialrichtung 90 gesehen. Federkammer 11 und Vertiefung 5 sind in Radialrichtung 90 zumindest teilweise nebeneinanderliegend angeordnet.

Der Einhängbereich 10 weist eine in Axialrichtung 100 gemessene Breite b1 auf. Die Federkammer 11 weist eine in Axialrichtung 100 gemessene Breite b2 auf. Die Breite b1 des Einhängbereichs 10 ist kleiner als die Breite b2 der Federkammer 11. Die Breite b1 des Einhängbereichs 10 ist kleiner als 70% der Breite b2 der Federkammer 11. Im Ausführungsbeispiel ist die Breite b1 des Einhängbereichs 10 kleiner als 65% der Breite b2 der Federkammer 11.

Die Seilrolle 2 weist eine in Axialrichtung 100 gemessene maximale Breite b3 auf. Die Vertiefung 5 weist eine an der Umfangsseite 4 der Seilrolle 2 in Axialrichtung 100 gemessene Breite b4 auf. Die Breite b4 der Vertiefung 5 beträgt mindestens 15% der maximalen Breite b3 der Seilrolle 2. Im Ausführungsbeispiel beträgt die Breite b4 der Vertiefung 5 mindestens 25% der maximalen Breite b3 der Seilrolle 2.

Die Breite b1 des Einhängbereichs 10 beträgt mindestens 25% der maximalen Breite b3 der Seilrolle 2.

Die Verbindungsfeder 9 weist eine in Axialrichtung 100 gemessene maximale Breite b5 auf. Die Verbindungsfeder 9 weist eine an ihrem ersten Ende 12 in Axialrichtung 100 gemessene Breite b6 auf. Im Ausführungsbeispiel ist die Breite b6 der Verbindungsfeder 9 an ihrem ersten Ende 12 im Bereich des Einhängfortsatzes 13 gemessen. Die Breite b6 der Verbindungsfeder 9 an ihrem ersten Ende 12 ist kleiner als die maximale Breite b5 der Verbindungsfeder 9. Die Breite b6 der Verbindungsfeder 9 an ihrem ersten Ende 12 ist im Bereich des Einhängfortsatzes 13 kleiner als 75% der maximalen Breite b5 der Verbindungsfeder 9. Im Ausführungsbeispiel ist die Breite b6 der Verbindungsfeder 9 an ihrem ersten Ende 12 im Bereich des Einhängfortsatzes 13 kleiner als 65% der maximalen Breite b5 der Verbindungsfeder 9.

Der Einhängfortsatz 13 weist eine in Axialrichtung 100 gemessene Breite b7 auf. Die Breite b7 des Einhängfortsatzes 13 ist kleiner als die maximale Breite b5 der Verbindungsfeder 9. Die Breite b7 des Einhängfortsatzes 13 ist kleiner als 75% der maximalen Breite b5 der Verbindungsfeder 9. Im Ausführungsbeispiel ist die Breite b7 des Einhängfortsatzes 13 kleiner als 65% der maximalen Breite b5 der Verbindungsfeder 9.

Wie in Fig. 6 dargestellt, ist die Verbindungsfeder 9 in Umfangsrichtung 80 vorteilhaft in einem Winkelbereich α von mindestens 5° um die Drehachse 50 schmaler als die maximale Breite b5 der Verbindungsfeder 9. Im Ausführungsbeispiel ist die Verbindungsfeder 9 in Umfangsrichtung 80 im Winkelbereich α von mindestens 10° schmaler als die maximale Breite b5 der Verbindungsfeder 9.

Wie in Fig. 4 dargestellt, besitzt die Verbindungsfeder 9 eine in Radialrichtung 90, ausgehend von der Drehachse 50, gemessene größte radiale Ausdehnung a. Aus der Zusammenschau der Fig. 1 und 4 ergibt sich, dass sich der Einhängfortsatz 13 in Radialrichtung 90 über mindestens 10% der größten radialen Ausdehnung a der Verbindungsfeder 9 erstreckt. Im Ausführungsbeispiel erstreckt sich der Einhängfortsatz 13 in Radialrichtung 90 über mindestens 15% der größten radialen Ausdehnung a der Verbindungsfeder 9.

Wie in Fig. 4 dargestellt, ist der Einhängfortsatz 13 der Verbindungsfeder 9 in Axialrichtung 100 neben dem Anwerfseil 26 angeordnet. Außer dem Einhängfortsatz 13 weist die Verbindungsfeder 9 den Grundkörper 32 auf. Der Grundkörper 32 liegt in Radialrichtung 90 näher zur Drehachse 100 als der Einhängfortsatz 13. Der Grundkörper 32 der Verbindungsfeder 9 ist in der Federkammer 11 der Federaufnahme 8 angeordnet. Die Vertiefung 5 läuft um den Grundkörper 32 der Verbindungsfeder 9 um. Die Vertiefung 5 umschließt den Grundkörper 32 der Verbindungsfeder 9. Der Grundkörper 32 der Verbindungsfeder 9 und das Anwerfseil 26 in der Vertiefung 5 sind in Radialrichtung 90 nebeneinanderliegend angeordnet.

Wie in Fig. 4 dargestellt, weist die Seilrolle 2 an ihrer Umfangsseite 4 eine Luftleitkontur 14 auf. Die Umfangsseite 4 der Seilrolle 2 läuft in Umfangsrichtung 80 um die Drehachse 50 um. Die Luftleitkontur 14 ist in einem Schnitt entlang der Drehachse 50 vorteilhaft konkav. Dies bedeutet, dass die Luftleitkontur 14 in Ansicht von außerhalb der Seilrolle 2 in Richtung senkrecht auf die Drehachse 50 konkav ist. Die Luftleitkontur ist in Ansicht von außerhalb der Seilrolle 2 entgegen der Radialrichtung 90 konkav.

Die Seilrolle 2 besitzt in Axialrichtung 100 eine erste Außenfläche 33 und eine zweite Außenfläche 34. Die erste Außenfläche 33 und die zweite Außenfläche 34 bilden bezüglich der Axialrichtung 100 einander abgewandte Stirnseiten der Seilrolle 3. Die erste Außenfläche 33 ist der Verbindungsfeder 9 abgewandt. Die zweite Außenfläche 34 ist der Verbindungsfeder 9 zugewandt. Die zweite Außenfläche 34 liegt in Axialrichtung 100 benachbart zum Einhängbereich 10 der Federaufnahme 8, und die erste Außenfläche 33 liegt in Axialrichtung 100 benachbart zur Vertiefung 5 der Seilrolle 2. Die Luftleitkontur 14 erstreckt sich in der Umfangsseite 4 der Seilrolle 2 bis zur zweiten Außenfläche 34 der Seilrolle 2. Die Luftleitkontur 14 der Seilrolle 2 läuft fast vollständig um die Drehachse 50 um. Wie in Fig. 3 dargestellt, ist die Luftleitkontur 14 in Umfangsrichtung 80 lediglich durch den Einhängbereich 10 der Federaufnahme 8 und den Aufnahmeraum 39 für den Knoten des Anwerfseils 26 unterbrochen. Der Einhängbereich 10 und der Aufnahmeraum 39 liegen in Umfangsrichtung 80 unmittelbar nebeneinander und bilden einen gemeinsamen Umfangsabschnitt. Die Luftleitkontur 14 ist in Umfangsrichtung 80 lediglich an diesem einen gemeinsamen Umfangsabschnitt unterbrochen.

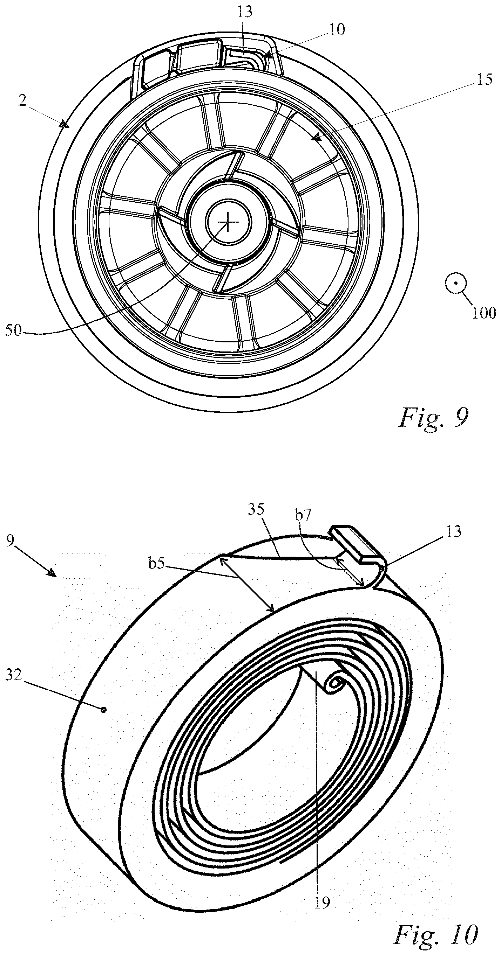

Die Figuren 5 und 10 zeigen die Verbindungsfeder 9 in einer schematischen, perspektivischen Darstellung. Aus der Zusammenschau der Fig. 5 und 6 ergibt sich, dass die Verbindungsfeder 9 im Ausführungsbeispiel im Bereich ihres Grundkörpers 32 außer im Winkelbereich α die maximale Breite b5 aufweist. An ihrem ersten Ende 12, zwischen dem Bereich des Grundkörpers 32 mit maximaler Breite b5 und dem Einhängfortsatz 13, weist die Verbindungsfeder 9 eine Übergangsfläche 35 auf. Die Breite der Verbindungsfeder 9 im Bereich der Übergangsfläche 35 nimmt, ausgehend vom Einhängfortsatz 13 bis zu dem Bereich des Grundkörpers 32 der Verbindungsfeder 9 mit maximaler Breite b5, bezüglich der Umfangsrichtung 80 zu. Insbesondere nimmt die Breite der Verbindungsfeder 9 im Bereich der Übergangsfläche 35 kontinuierlich zu. Die Zunahme kann linear oder nichtlinear verlaufen. Im Ausführungsbeispiel erfolgt die Zunahme nichtlinear, wie in Fig. 10 zu erkennen. Die Übergangsfläche 35 verbindet den Bereich des Grundkörpers 32 der Verbindungsfeder 9 mit maximaler Breite b5 mit dem Einhängfortsatz 13 der Verbindungsfeder 9. Es kann zweckmäßig sein, am inneren, zweiten Ende 19 der Verbindungsfeder 9 ebenso eine Änderung der Breite der Verbindungsfeder 9 vorzusehen.

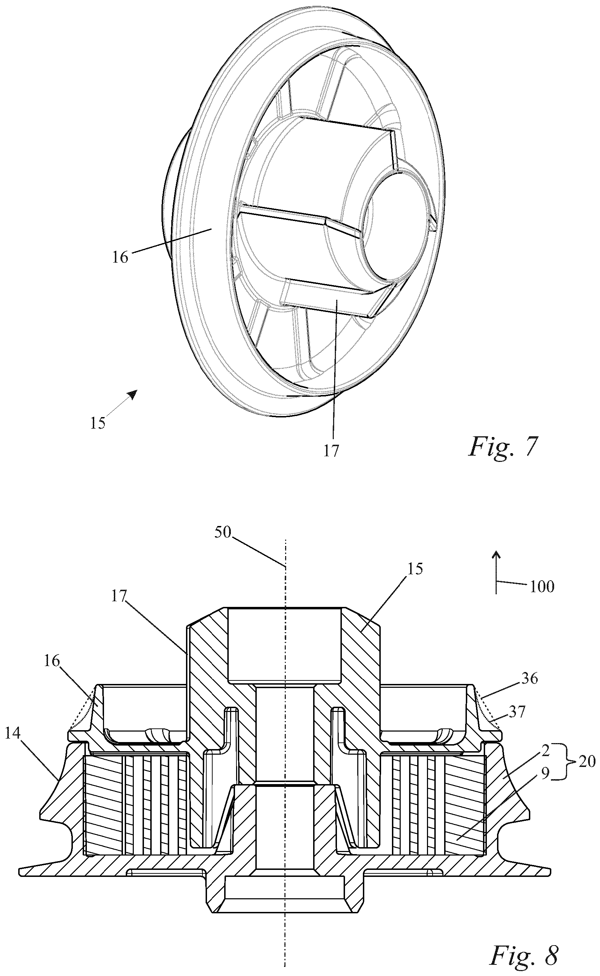

Fig. 7 zeigt den Mitnehmer 15 in einer perspektivischen Darstellung. Der Mitnehmer 15 weist einen Luftleitkragen 16 auf. Wie in Fig. 1 dargestellt, ist der Luftleitkragen 16 auf einer der Verbindungsfeder 9 abgewandten Seite des Mitnehmers 15 angeordnet. Der Luftleitkragen 16 ist in Radialrichtung 90 außerhalb der Koppelmittel 17 angeordnet.

Fig. 8 zeigt einen Schnitt durch die Seilrollenbaugruppe 20 bei auf der Seilrollenbaugruppe 20 angeordnetem Mitnehmer 15. Die Schnittebene beinhaltet die Drehachse 50.

Die Kontur 36 des Luftleitkragens 16 ist mit gestrichelter Linie eingezeichnet. Die Kontur 36 des Luftleitkragens 16 verläuft in einem Schnitt entlang der Drehachse 50 konisch. Hierbei verjüngt sich der Mitnehmer in Axialrichtung 100. Es kann auch vorgesehen sein, dass die Kontur des Luftleitkragens in einem Schnitt entlang der Drehachse 50 zumindest in einem Abschnitt konkav verläuft. Ein solcher Verlauf ist unter dem Bezugszeichen 37 mit gestrichelter Linie in Fig. 8 eingezeichnet.

Der Mitnehmer 15 deckt die Federkammer 11 der Federaufnahme 8 in Axialrichtung 100 gesehen vollständig ab. Der Einhängbereich 10 der Federaufnahme 8 ragt vorteilhaft zumindest teilweise in Radialrichtung 90 über den Mitnehmer 15 hinaus. Dies ist auch in Fig. 9 dargestellt.

## Patentansprüche

1. Seilrollenbaugruppe für eine Anwerfvorrichtung zum Starten eines Verbrennungsmotors eines handgeführten Arbeitsgeräts, umfassend eine Seilrolle (2) und eine Verbindungsfeder (9), wobei ein erstes Ende (12) der Verbindungsfeder (9) drehfest mit der Seilrolle (2) verbunden ist, wobei die Seilrolle (2) eine sich in einer Axialrichtung (100) erstreckende Drehachse (50) aufweist, wobei die Seilrolle (2) in ihrer in einer Radialrichtung (90) außenliegenden Umfangsseite (4) eine umlaufende Vertiefung (5) zur Aufnahme eines Anwerfseils (26) aufweist, und wobei die Seilrolle (2) eine Federaufnahme (8) zur Aufnahme der Verbindungsfeder (9) aufweist, wobei sich die Federaufnahme (8) und die Vertiefung (5) sowohl in Axialrichtung (100) gesehen als auch in Radialrichtung (90) gesehen überlappen, wobei die Federaufnahme (8) eine Federkammer (11) und einen Einhängbereich (10) zur Verbindung mit der Verbindungsfeder (9) umfasst, wobei der Einhängbereich (10) und die Vertiefung (5) in Axialrichtung (100) zumindest teilweise nebeneinanderliegend angeordnet sind, wobei die Verbindungsfeder (9) mit dem ersten Ende (12) in den Einhängbereich (10) der Federaufnahme (8) eingehängt ist, wobei die Verbindungsfeder (9) eine in Axialrichtung (100) gemessene maximale Breite (b5) aufweist,
**dadurch gekennzeichnet, dass** eine in Axialrichtung (100) gemessene Breite (b6) der Verbindungsfeder (9) an ihrem ersten Ende (12) kleiner als die maximale Breite (b5) der Verbindungsfeder (9) ist.

2. Seilrollenbaugruppe nach Anspruch 1,
**dadurch gekennzeichnet, dass** der Einhängbereich (10) eine in Axialrichtung (100) gemessene Breite (b1) aufweist, dass die Federkammer (11) eine in Axialrichtung (100) gemessenen Breite (b2) aufweist, und dass die Breite (b1) des Einhängbereichs (10) kleiner als 100%, insbesondere kleiner als 70%, bevorzugt kleiner als 65% der Breite (b2) der Federkammer (11) ist.

3. Seilrollenbaugruppe nach Anspruch 2,
**dadurch gekennzeichnet, dass** die Seilrolle (2) eine in Axialrichtung (100) gemessene maximale Breite (b3) aufweist, und dass eine an der Umfangsseite (4) der Seilrolle (2) in Axialrichtung (100) gemessene Breite (b4) der Vertiefung (5) mindestens 15%, insbesondere mindestens 25% der maximalen Breite (b3) der Seilrolle (2) beträgt.

4. Seilrollenbaugruppe nach einem der Ansprüche 1 bis 3,
**dadurch gekennzeichnet, dass** die Verbindungsfeder (9) an ihrem ersten Ende (12) in Umfangsrichtung (80) um die Drehachse (50) in einem Winkelbereich (α) von mindestens 5°, insbesondere von mindestens 10° schmaler als die maximale Breite (b5) der Verbindungsfeder (9) ist.

5. Seilrollenbaugruppe nach einem der Ansprüche 1 bis 4,
**dadurch gekennzeichnet, dass** die Seilrolle (2) an ihrer Umfangsseite (4) eine Luftleitkontur (14) aufweist.

6. Seilrollenbaugruppe nach Anspruch 5,
**dadurch gekennzeichnet, dass** die Luftleitkontur (14) in einem Schnitt entlang der Drehachse (50) konkav ist.

7. Seilrollenbaugruppe nach einem der Ansprüche 1 bis 6,
**dadurch gekennzeichnet, dass** die Verbindungsfeder (9) eine Spiralfeder ist.

8. Anwerfvorrichtung mit einer Seilrollenbaugruppe nach einem der Ansprüche 1 bis 7,
**dadurch gekennzeichnet, dass** die Anwerfvorrichtung (1) eine Koppeleinrichtung (6) zur Verbindung der Seilrolle (2) mit einer Kurbelwelle (18) des Verbrennungsmotors (21) umfasst, dass ein zweites Ende (19) der Verbindungsfeder (9) der Seilrollenbaugruppe (20) drehfest mit der Koppeleinrichtung (6) verbunden ist.

9. Anwerfvorrichtung nach Anspruch 8.
**dadurch gekennzeichnet, dass** die Koppeleinrichtung (6) ein Mitnehmer (15) ist.

10. Anwerfvorrichtung nach Anspruch 8 oder 9,
**dadurch gekennzeichnet, dass** der Mitnehmer (15) die Federkammer (11) in Axialrichtung (100) vollständig abdeckt.

11. Anwerfvorrichtung nach einem der Ansprüche 8 bis 10,
**dadurch gekennzeichnet, dass** die Koppeleinrichtung (6) Koppelmittel (17) zur Kopplung der Anwerfvorrichtung (1) mit der Kurbelwelle (18) des Verbrennungsmotors (21) umfasst, dass die Koppeleinrichtung (6) einen Luftleitkragen (16) umfasst, dass der Luftleitkragen (16) auf einer der Verbindungsfeder (9) abgewandten Seite der Koppeleinrichtung (6) angeordnet ist und dass der Luftleitkragen (16) radial außerhalb der Koppelmittel (17) angeordnet ist.

12. Anwerfvorrichtung nach Anspruch 11,
**dadurch gekennzeichnet, dass** der Luftleitkragen (16) in einem Schnitt entlang der Drehachse (50) zumindest in einem Abschnitt konisch ist.

13. Seilrollenbaugruppe nach einem der Ansprüche 1 bis 7 oder Anwerfvorrichtung nach einem der Ansprüche 8 bis 12,
**dadurch gekennzeichnet, dass** die in Axialrichtung (100) gemessene Breite (b6) der Verbindungsfeder (9) an ihrem ersten Ende (12) kleiner als 75% der maximalen Breite (b5) der Verbindungsfeder (9) ist.

14. Seilrollenbaugruppe oder Anwerfvorrichtung nach Anspruch 13,
**dadurch gekennzeichnet, dass** die in Axialrichtung (100) gemessene Breite (b6) der Verbindungsfeder (9) an ihrem ersten Ende (12) kleiner als 65% der maximalen Breite (b5) der Verbindungsfeder (9) ist.

## Claims

1. Rope-pulley assembly for a starting apparatus for starting a combustion engine of a hand-held implement, comprising a rope pulley (2) and a connecting spring (9), wherein a first end (12) of the connecting spring (9) is connected in a rotationally conjoint manner to the rope pulley (2), wherein the rope pulley (2) has an axis of rotation (50) extending in an axial direction (100), wherein the rope pulley (2) has in its circumferential side (4) situated at the outside in a radial direction (90) an encircling depression (5) for receiving a starting rope (26), and wherein the rope pulley (2) has a spring receptacle (8) for receiving the connecting spring (9), wherein, when seen both in the axial direction (100) and in the radial direction (90), the spring receptacle (8) and the depression (5) overlap, wherein the spring receptacle (8) comprises a spring chamber (11) and a fitting region (10) for connection to the connecting spring (9), wherein the fitting region (10) and the depression (5) are arranged so as to be situated adjacent to one another at least partially in the axial direction (100), wherein the connecting spring (9) is fitted by way of the first end (12) into the fitting region (10) of the spring receptacle (8), wherein the connecting spring (9) has a maximum width (b5) measured in the axial direction (100),
**characterized in that** a width (b6), measured in the axial direction (100), of the connecting spring (9) at the first end (12) thereof is less than the maximum width (b5) of the connecting spring (9).

2. Rope-pulley assembly according to Claim 1,
**characterized in that** the fitting region (10) has a width (b1) measured in the axial direction (100), **in that** the spring chamber (11) has a width (b2) measured in the axial direction (100), and **in that** the width (b1) of the fitting region (10) is less than 100%, in particular less than 70%, preferably less than 65%, of the width (b2) of the spring chamber (11).

3. Rope-pulley assembly according to Claim 2,
**characterized in that** the rope pulley (2) has a maximum width (b3) measured in the axial direction (100), and **in that** a width (b4), measured in the axial direction (100) on the circumferential side (4) of the rope pulley (2), of the depression (5) is at least 15%, in particular at least 25%, of the maximum width (b3) of the rope pulley (2).

4. Rope-pulley assembly according to one of Claims 1 to 3,
**characterized in that**, at its first end (12), the connecting spring (9) is narrower than the maximum width (b5) of the connecting spring (9) in an angular range (α) of at least 5°, in particular of at least 10°, in the circumferential direction (80) about the axis of rotation (50).

5. Rope-pulley assembly according to one of Claims 1 to 4,
**characterized in that** the rope pulley (2) has an air-guiding contour (14) on its circumferential side (4).

6. Rope-pulley assembly according to Claim 5,
**characterized in that** the air-guiding contour (14) is concave in a section along the axis of rotation (50).

7. Rope-pulley assembly according to one of Claims 1 to 6,
**characterized in that** the connecting spring (9) is a spiral spring.

8. Starting apparatus having a rope-pulley assembly according to one of Claims 1 to 7,
**characterized in that** the starting apparatus (1) comprises a coupling device (6) for connecting the rope pulley (2) to a crankshaft (18) of the combustion engine (21), and **in that** a second end (19) of the connecting spring (9) of the rope-pulley assembly (20) is connected in a rotationally conjoint manner to the coupling device (6).

9. Starting apparatus according to Claim 8,
**characterized in that** the coupling device (6) is a driver (15).

10. Starting apparatus according to Claim 8 or 9,
**characterized in that** the driver (15) completely covers the spring chamber (11) in the axial direction (100).

11. Starting apparatus according to one of Claims 8 to 10,
**characterized in that** the coupling device (6) comprises coupling means (17) for coupling the starting apparatus (1) to the crankshaft (18) of the combustion engine (21), **in that** the coupling device (6) comprises an air-guiding collar (16), **in that** the air-guiding collar (16) is arranged on a side of the coupling device (6) that faces away from the connecting spring (9), and **in that** the air-guiding collar (16) is arranged radially outside the coupling means (17).

12. Starting apparatus according to Claim 11,
**characterized in that** the air-guiding collar (16) is conical at least in one portion in a section along the axis of rotation (50).

13. Rope-pulley assembly according to one of Claims 1 to 7 or starting apparatus according to one of Claims 8 to 12,
**characterized in that** the width (b6), measured in the axial direction (100), of the connecting spring (9) at its first end (12) is less than 75% of the maximum width (b5) of the connecting spring (9).

14. Rope-pulley assembly or starting apparatus according to Claim 13,
**characterized in that** the width (b6), measured in the axial direction (100), of the connecting spring (9) at its first end (12) is less than 65% of the maximum width (b5) of the connecting spring (9).

## Revendications

1. Ensemble poulie pour un dispositif de démarrage destiné à démarrer un moteur à combustion interne d'un outil de travail portatif, comprenant une poulie (2) et un ressort de liaison (9), une première extrémité (12) du ressort de liaison (9) étant reliée de manière solidaire en rotation à la poulie (2), la poulie (2) présentant un axe de rotation (50) s'étendant dans une direction axiale (100), la poulie (2) présentant, dans son côté périphérique (4) situé à l'extérieur selon une direction radiale (90), un évidement circonférentiel (5) destiné à recevoir un câble de démarrage (26), et la poulie (2) présentant un logement de ressort (8) destiné à recevoir le ressort de liaison (9), le logement de ressort (8) et l'évidement (5) se chevauchant aussi bien vus dans la direction axiale (100) que vus dans la direction radiale (90), le logement de ressort (8) comprenant une chambre à ressort (11) et une zone d'accrochage (10) pour la liaison avec le ressort de liaison (9), la zone d'accrochage (10) et l'évidement (5) étant agencés au moins partiellement l'un à côté de l'autre dans la direction axiale (100), le ressort de liaison (9) étant accroché par la première extrémité (12) dans la zone d'accrochage (10) du logement de ressort (8), le ressort de liaison (9) présentant une largeur maximale (b5) mesurée dans la direction axiale (100),
**caractérisé en ce qu'**une largeur (b6) du ressort de liaison (9) mesurée dans la direction axiale (100) à sa première extrémité (12) est inférieure à la largeur maximale (b5) du ressort de liaison (9).

2. Ensemble poulie selon la revendication 1,
**caractérisé en ce que** la zone d'accrochage (10) présente une largeur (b1) mesurée dans la direction axiale (100), **en ce que** la chambre à ressort (11) présente une largeur (b2) mesurée dans la direction axiale (100), et **en ce que** la largeur (b1) de la zone d'accrochage (10) est inférieure à 100%, notamment inférieure à 70%, de préférence inférieure à 65%, de la largeur (b2) de la chambre à ressort (11).

3. Ensemble poulie selon la revendication 2,
**caractérisé en ce que** la poulie (2) présente une largeur maximale (b3) mesurée dans la direction axiale (100), et **en ce qu'**une largeur (b4) de la cavité (5), mesurée sur le côté périphérique (4) de la poulie (2) dans la direction axiale (100), représente au moins 15%, en particulier au moins 25%, de la largeur maximale (b3) de la poulie (2).

4. Ensemble poulie selon l'une des revendications 1 à 3,
**caractérisé en ce que** le ressort de liaison (9) est plus étroit que la largeur maximale (b5) du ressort de liaison (9) à sa première extrémité (12) dans la direction circonférentielle (80) autour de l'axe de rotation (50) dans une gamme angulaire (α) d'au moins 5°, en particulier d'au moins 10°.

5. Ensemble poulie selon l'une des revendications 1 à 4,
**caractérisé en ce que** la poulie (2) présente un contour (14) de guidage d'air sur son côté périphérique (4).

6. Ensemble poulie selon la revendication 5,
**caractérisé en ce que** le contour (14) de guidage d'air est concave selon une coupe prise le long de l'axe de rotation (50).

7. Ensemble poulie selon l'une des revendications 1 à 6,
**caractérisé en ce que** le ressort de liaison (9) est un ressort spiral.

8. Dispositif de démarrage comprenant un ensemble poulie selon l'une des revendications 1 à 7,
**caractérisé en ce que** le dispositif de démarrage (1) comprend un dispositif d'accouplement (6) pour relier la poulie (2) à un vilebrequin (18) du moteur à combustion interne (21), **en ce qu'**une deuxième extrémité (19) du ressort de liaison (9) de l'ensemble poulie (20) est solidaire en rotation du dispositif d'accouplement (6).

9. Dispositif de démarrage selon la revendication 8,
**caractérisé en ce que** le dispositif d'accouplement (6) est un organe d'entraînement (15).

10. Dispositif de démarrage selon la revendication 8 ou la revendication 9, **caractérisé en ce que** l'organe d'entraînement (15) recouvre entièrement la chambre à ressort (11) dans la direction axiale (100).

11. Dispositif de démarrage selon l'une des revendications 8 à 10,
**caractérisé en ce que** le dispositif d'accouplement (6) comprend des moyens d'accouplement (17) pour relier le dispositif de démarrage (1) au vilebrequin (18) du moteur à combustion interne (21), **en ce que** le dispositif d'accouplement (6) comprend un collet (16) de guidage d'air, **en ce que** le collet (16) de guidage d'air est agencé sur un côté du dispositif d'accouplement (6) opposé au ressort de liaison (9) et **en ce que** le collet (16) de guidage d'air est agencé radialement à l'extérieur des moyens d'accouplement (17).

12. Dispositif de démarrage selon la revendication 11,
**caractérisé en ce que** le collet (16) de guidage d'air est conique en coupe prise le long de l'axe de rotation (50), au moins dans une portion.

13. Ensemble poulie selon l'une des revendications 1 à 7 ou dispositif de démarrage selon l'une des revendications 8 à 12,
**caractérisé en ce que** la largeur (b6) du ressort de liaison (9) mesurée dans la direction axiale (100) à sa première extrémité (12) est inférieure à 75% de la largeur maximale (b5) du ressort de liaison (9).

14. Ensemble poulie ou dispositif de démarrage selon la revendication 13, **caractérisé en ce que** la largeur (b6) du ressort de liaison (9) mesurée dans la direction axiale (100) à sa première extrémité (12) est inférieure à 65% de la largeur maximale (b5) du ressort de liaison (9).
